# EUROPEAN PATENT SPECIFICATION

(11) **EP 0 569 066 B1**
(45) Date of publication and mention of the grant of the patent: **25.10.1995**
(21) Application number: 93200974.9
(22) Date of filing: 02.04.1993
(51) Int. Cl.: A01N 37/16

(54) **Disinfectant compositions**
Desinfizierende Zusammensetzungen
Compositions désinfectantes

(30) Priority: 16.04.1992 EP 92201093
(43) Date of publication of application: 10.11.1993
(73) Proprietor: UNILEVER N.V., 3000 DK Rotterdam (NL); UNILEVER PLC, London EC4P 4BQ (GB)
(72) Inventor: Benjamins, Peter, NL-7542 HA Enschede (NL); de Boer, Robbert, NL-7555 JK Hengelo (NL)
(74) Representative: Kan, Jacob Hendrik, Dr.

(56) References cited:
- EP-A- 0 313 143
- EP-A- 0 461 700
- WO-A-91/03590
- US-A- 4 147 720

## Description

### FIELD OF THE INVENTION

The invention relates to disinfectant compositions. More specifically, it relates to either concentrated or aqueous stable disinfectant compositions containing peroxy compounds. The invention is suitable to be used for disinfecting objects and surfaces at locations where microbial contamination is of major concern, such as in hospitals and in the food and beverage industry.

### PRIOR ART AND BACKGROUND TO THE INVENTION

It is known that peroxy acids such as 1,12-dodecane dioic peroxy acids can be effectively applied as anti-bacterial agents in pharmaceutical compositions. US-A- 4,804,530 discloses a method for treating anaerobic bacterial infections particularly in the oral cavity, which method comprises contacting the infected tissue with a safe and effective amount of 1,12-dodecane dioic peroxy acid.

It is also known that peroxy acids such as peroxy acetic acid are broad spectrum biocides that have a wide applicability against bacteria and are usable against viruses, moulds and yeasts. According to EP-A-233 731 peroxy acids of mono carboxylic acids having a carbon chain length of 5 to 8 carbon atoms show enhanced activity against a broad spectrum of micro-organisms. Though only moderately soluble in water, these peroxy acids are sufficiently soluble to be used as aqueous solutions at the required disinfectant concentrations. However, aqueous solutions of these peroxy acids have only limited chemical stability due to the fast decomposition of peroxy acid in water.

However, US-A-4,147,720 discloses,that the chemical stability of aqueous suspensions of solid, substantially water-insoluble peroxy acids is considerably higher. US-A-4,417,720 also mentions that this type of aqueous suspensions,especially of aliphatic diperoxydicarboxylic acids, possess good disinfecting properties.

We have found that a solid, substantially water-insoluble organic peroxy acid such as 1,12-diperoxy dodecane dioic acid did show effective killing ability with respect to various bacteria, such as Staphylococcus aureus, Streptococcus faecalis, Proteus mirabilis and Escherichia coli. However, it failed to kill Pseudomonas aeruginosa when acceptable 1,12-diperoxy dodecane dioic acid concentrations were applied.

Accordingly, an object of the present invention is to provide specific peroxy acid compositions which overcome the above shortcomings, more specifically in that they are sufficiently active against Pseudomonas aeruginosa when diluted to acceptable working concentrations. Another object is to provide specific peroxy acid compositions which are sufficiently stable to permit preformulation, optionally in the form of dilutable concentrates, and storage.

EP-A-461,700 discloses an aqueous disinfectant composition comprising a substantially water-insoluble peroxy acid e.g. 1,12-diperoxy dodecane dioic acid and a sequestering agent, showing enhanced activity against Pseudomonas Aeruginosa and being sufficiently stable to permit preformulation. Formulations including acetate ions are described.

We have now found a very suitable alternative disinfectant composition with which the above-mentioned objects can be effectively achieved. We have surprisingly observed that the incorporation of an effective amount of certain water-soluble organic acids in combination into a disinfectant composition containing a peroxy acid will result in a composition with a constant and a storage stable biocidal activity, after dilution with water to acceptable working concentrations. This biocidal activity is such that Pseudomonas aeruginosa is effectively killed.

### DEFINITION OF THE INVENTION

The present invention provides a concentrated disinfectant composition as set out in claim 1.

The invention also provides an aqueous disinfectant composition with a pH in the range of from 2 to 6 and prepared by diluting the concentrated disinfectant composition according to the invention to a working concentration of 0.1-5.0% by weight in water. The invention, further, provides a process for disinfecting a surface or an article wherein the aqueous disinfectant composition according to the invention is applied to the surface or article.

### DETAILED DESCRIPTION OF THE INVENTION

For stability reasons, the concentrates of the aqueous disinfectant compositions according to the present invention have a pH in the range of from 2 to 4. The reason is that organic peroxy acids, particularly peroxy carboxylic acids, are never 100% stable in a dispersion. They will always slowly decompose. In the pH-range of from 2 to 4, preferably from 3 to 4, most preferably from 3 to 3.5, this decomposition rate is less than 2 % per month at storage temperatures of approximately 20°C. Above and below this pH-range, the decomposition rate is much larger. When applying 1,12-diperoxy dodecane dioic acid as peroxy acid in the disinfectant composition, it was observed that decomposition of this peroxy acid mainly delivers hydrogen peroxide inside a pH-range of from 3 to 3.5. As a result of this hydrogen peroxide formation the microbicidal activity of the disinfectant decreases.

With regard to this decomposition of the peroxy acid to hydrogen peroxide it was unexpectedly found that addition of a water-soluble organic acid counteracts the decrease of the microbicidal activity.

The concentration of the organic acid in the concentrated disinfectant composition is preferably ranging from 0.5 to 20 % by weight.

Preferably, a sequestering agent is present in the disinfectant composition according to the invention. Its concentration is generally lower than 5% by weight, preferably lower than 1 % by weight, as calculated on the weight of the concentrated composition. The function of the sequestering agent is the removal of free metal ions from the concentrated disinfectant composition which ions could negatively influence the stability of the peroxy acid during storage.
Suitable sequestering agents are nitrilotriacetic acid, poly carboxy acid derivatives of amines or poly-amines and various phosphonic acids such as ethylene diamine tetra(methylene phosphonic acid) or diethylene triamine penta(methylene phosphonic acid).

Preferably, the solid, substantially water-insoluble organic peroxy acid is a peroxycarboxylic acid derived from a dicarboxylic acid containing 8 to 13 carbon atoms, which dicarboxylic acid is most preferably 1,12-diperoxy dodecane dioic acid. Methods for preparing such organic acids are known in the art.

The disinfectant compositions according to the present invention may further contain any conventional surfactant provided that it contributes to emulsifying the substantially water-insoluble organic peroxy acids. The concentration of this surfactant material is generally in the range from 0 to 50% by weight, but a maximum concentration of 20% is usually preferred. Suitable surfactants may be anionic surfactants, such as alkyl aryl sulfonates, alkyl sulfates and alkyl sulfonates, nonionic surfactants, such as ethylene oxide and/or propylene oxide condensation products with alcohols or alkylphenol, or mixtures thereof. The most preferred surfactant is sodium alkyl benzene sulfonate.

The pH of aqueous disinfectant compositions according to the present invention lies generally in the range of from 2 to 6, preferably from 3 to 5.
For obtaining a constant and storage- stable biocidal activity the pH of the concentrates of these aqueous compositions is desirably in the range of from 3 to 3.5.

### Microbicidal activity

It is an essential feature of the disinfectant composition of the invention that the incorporation of a water-soluble organic acid into a disinfectant containing a peroxy acid should bring about an improvement of the microbicidal activity. The microbicidal activity of various disinfectant compositions of the invention on Pseudomonas aeruginosa is assessed using the European Suspension Test (EST), as described in RIVM report nr 357901001 (Appendix 1), 1981. A liquid base composition containing 1,12-diperoxy dodecane dioic acid as peroxy acid, is formulated and subsequently at least one water-soluble organic acid is mixed with this base formulation. Thereafter, the pH of the resulting composition is adjusted to a value of 3.3 (±0.2) with sulphuric acid and finally water is added up to 100 parts (of the full formulation).

The various formulations are contacted with Pseudomonas aeruginosa during 5 minutes at a dilution in the range from 0.1 to 3% wt in water in the presence of 0.03% or 0.3% Bovine Serum Albumin (BSA) and the microbicidal activity is measured as the Logarithmic Decimal Reduction (LDR) of the micro-organism as described for the EST. For the purpose of comparison, a formulation having essentially the same composition as the formulations of the invention but with (more of) an inorganic salt such as sodium sulphate should be used.

The invention will be further illustrated by the following non-limiting examples wherein parts and percentages are by weight.
In these examples the following abbreviations are used:
- Dobanoic acid 103: - Dodecylbenzene sulphonic acid (ex Shell)
- Marlipal: - C13 Ethoxylated fatty alcohol (90%) with 10 ethylene oxide groups (ex Hüls)
- Sodium sulphate: - Sodium sulphate 0 aq. (ex Visser)
- Citric acid: - Citric acid 1 aq.
- DPDA: - 1,12-diperoxy dodecane dioic acid, 27% active (ex AKZO)

### Examples A, 1-4 (comparative)

For the purpose of base comparison, the following reference disinfectant composition was formulated.

| Constituent | parts |
|---|---|
| water | 60.50 |
| Dobanoic acid 103 | 7.00 |
| Marlipal | 3.33 |
| Sodium sulphate | 7.60 |
| DPDA | 18.52 |
| Minor ingredients | 0.05 |

The microbicidal activity of this reference composition with respect to Pseudomonas aeruginosa was tested in the presence of 0.03% BSA and at a dilution of this composition of 0.75% wt in water. As a result, an LDR-value of 0.03 was obtained.

Several disinfectant compositions were formulated by replacing part of the sodium sulphate in the above-described reference composition with a water-soluble organic acid selected from citric acid, acetic acid, propionic acid, and succinic acid. Their microbicidal activity on Pseudomonas aeruginosa at a dilution of 0.75% wt in water and in the presence of 0.03% BSA was tested. In Table 1, the water-soluble organic acids contained in these compositions, their concentration and the LDR-values of their microbicidal activity are listed.

**TABLE 1**

| Example nr. | Type of organic acid | Concentration of organic acid (parts) | LDR-value |
|---|---|---|---|
| 1 | citric acid | 5.5 | 1.14 |
| 2 | acetic acid | 3.0 | 1.06 |
| 3 | propionic acid | 3.0 | 0.57 |
| 4 | succinic acid | 3.0 | 0.67 |

It can be seen that these compositions have a considerably higher microbicidal activity than the reference formulation.

### Examples 5-7 (Examples of the invention)

Disinfectant formulations containing 2 types of water-soluble organic acid were prepared by adding to the formulation of example 1 another water-soluble organic acid. The microbicidal activity of the resulting disinfectant compositions on Pseudomonas aeruginosa in the presence of 0.03% BSA and at a dilution of 0.75% wt in water was tested.
Table 2 shows the types of additional water-soluble organic acid, their concentration and the LDR-values of the compositions tested.

**TABLE 2**

| Example nr. | Type of additional organic acid | Concentration of additional organic acid (parts) | LDR-value |
|---|---|---|---|
| 5 | acetic acid | 3.0 | 4.21 |
| 6 | propionic acid | 3.0 | 3.37 |
| 7 | succinic acid | 3.0 | 2.37 |

It can be concluded that disinfectant compositions of the invention containing two types of water-soluble organic acids of which one is citric acid, show an increased microbicidal activity as compared to compositions containing only one type of water-soluble organic acid.

### Examples 8-11

These examples were carried out in order to find out if the observed major improvement of the microbicidal activity found with the formulations of Examples 5-7 also takes place at higher protein pollutions. For that purpose, the microbicidal activity of the compositions of Examples 1, 5-7 on Pseudomonas aeruginosa was tested in the presence of 0.3% BSA and at a dilution of 1.50% wt in water. Table 3 shows the types of additional water-soluble organic acid - if present-, their concentration and the LDR-values of the compositions tested.

**TABLE 3**

| Example no. | Type of additional organic acid | Concentration of additional organic acid (parts) | LDR- |
|---|---|---|---|
| 8 (comparative) | - | - | < 5.0 |
| 9 | acetic acid | 3.0 | ≧ 7.3 |
| 10 | propionic acid | 3.0 | ≧ 7.3 |
| 11 | succinic acid | 3.0 | ≧ 7.3 |

It can be seen that also at a protein concentration of 0.3% BSA (which is 10 times as high as the BSA-level used for Examples 1,5-7) disinfectant compositions containing citric acid and another preferred water-soluble organic acid show a higher microbicidal activity as compared to compositions containing only citric acid.

### Example 12

This Example was carried out in order to find out if the improvement of the microbicidal activity found with the formulations of Examples 5-11 can also be found after storage of the formulations during a more or less prolonged period of time.

Starting with the above-shown reference composition, a disinfectant composition according to the present invention was prepared by replacing 6 parts of the sodium sulphate present in the reference composition by 3 parts citric acid and 3 parts acetic acid. Subsequently, the microbicidal activities of both the reference disinfectant composition and the composition according to the invention including the organic acids on Pseudomonas aeruginosa were measured at a dilution of 0.75 %wt and 1.5 %wt in water, both directly after preparing these compositions and after storage thereof at ambient temperature in closed containers during a varying number of weeks.
This microbicidal activity was tested in the presence of 0.03% BSA. Table 4 shows the results found, in terms of the LDR-values of the compositions tested after varying periods of storage.

**TABLE 4**

| Weeks after preparation of the compositions | LDR of the reference composition at a dilution of | | LDR of the composition of the invention at a dilution of | |
|---|---|---|---|---|
| | 0.75 | 1.5 | 0.75 | 1.5 |
| 0 | 0.0 | 0.2 | 4.6 | > 7.9 |
| 1 | 0.1 | 0.5 | 5.1 | > 8.2 |
| 2 | 0.4 | 0.1 | 3.6 | 5.4 |
| 4 | 0.1 | 0.2 | 2.3 | > 8.2 |
| 7 | - | 0.0 | - | 7.9 |

It can be seen that at a dilution of 0.75 %wt in water the improved microbicidal activity of the disinfectant composition according to the invention slowly decreases with storage time. However, a significant LDR-value of 2.3 could still be measured after storage during 4 weeks.
Furthermore, it can be noticed that when tested at a dilution of 1.5 %wt in water the microbicidal activity of the composition of the invention is not even reduced after a storage time of 7 weeks as compared to the activity found directly after preparing the composition.

## Claims

1. A concentrated disinfectant composition based on peroxy compounds, being a stable suspension which is suitable to provide an aqueous disinfectant composition with a pH in the range of from 2 to 6, said concentrated composition comprising:
(a) 0.1 - 50 % by weight of a solid, substantially water-insoluble organic peroxy acid;
(b) 0.1 - 50 % by weight of water-soluble organic acids in the form of citric acid and another water-soluble organic acid selected from acetic acid, propionic acid and succinic acid and having a pH in the range of from 2 to 4.

2. Composition according to claim 1, wherein the composition contains at most 5% by weight of a sequestering agent.

3. Composition according to claim 2, wherein the sequestering agent is selected from the group consisting of polycarboxy acid derivatives of amines or polyamines, nitrilotriacetic acid, and phosphonic acids.

4. Composition according to any one of claims 1-3, wherein the solid, substantially water-insoluble organic peroxy acid is a peroxycarboxylic acid derived from a dicarboxylic acid containing 8 to 13 carbon atoms.

5. Composition according to claim 4, wherein the organic peroxy acid is 1,12- diperoxy dodecane dioic acid.

6. Composition according to any of claims 1-5, further comprising up to 50% by weight of a surfactant selected from anionic surfactants, nonionic surfactants and mixtures thereof.

7. Aqueous disinfectant composition prepared by diluting a concentrated composition according to any of claims 1-6 to a working concentration of 0.1 - 5.0 % by weight in water, and having a pH in the range of from 2 to 6.

8. Disinfectant composition according to claim 7, wherein the composition has a pH in the range of from 3 to 5.

9. Process for disinfecting a surface or an article wherein an aqueous disinfectant composition according to claim 7 or claim 8 is applied to the surface or article.

## Patentansprüche

1. Konzentrierte desinfizierende Zusammensetzung auf Basis von Peroxy-Verbindungen, die eine stabile Suspension ist, geeignet zur Bereitstellung einer wässerigen desinfizierenden Zusammensetzung mit einem pH-Wert im Bereich von 2 bis 6, wobei die konzentrierte Zusammensetzung enthält:
(a) 0,1 bis 50 Gewichtsprozent einer festen, im wesentlichen wasserunlöslichen organischen Peroxysäure;
(b) 0,1 bis 50 Gewichtsprozent an wasserlöslichen organischen Säuren in der Form von Citronensäure und einer anderen wasserlöslichen organischen Säure, ausgewählt aus Essigsäure, Propionsäure und Bernsteinsäure, und mit einem pH-Wert im Bereich von 2 bis 4.

2. Zusammensetzung nach Anspruch 1, worin die Zusammensetzung höchstens 5 Gewichtsprozent eines Maskierungsmittels enthält.

3. Zusammensetzung nach Anspruch 2, worin das Maskierungsmittel aus der Gruppe bestehend aus Polycarboxysäure-Derivaten von Aminen oder Polyaminen, Nitrilotriessigsäure und Phosphonsäuren ausgewählt ist.

4. Zusammensetzung nach einem der Ansprüche 1 bis 3, worin die feste, im wesentlichen wasserunlösliche organische Peroxysäure eine Peroxycarbonsäure ist, abgeleitet von einer Dicarbonsäure mit 8 bis 13 Kohlenstoffatomen.

5. Zusammensetzung nach Anspruch 4, worin die organische Peroxysäure 1,12-Diperoxydodecandisäure ist.

6. Zusammensetzung nach einem der Ansprüche 1 bis 5, die weiterhin bis zu 50 Gewichtsprozent eines Surfactants enthält, ausgewählt aus anionischen Surfactants, nichtionischen Surfactants und Mischungen derselben.

7. Wässerige desinfizierende Zusammensetzung, hergestellt durch Verdünnen einer konzentrierten Zusammensetzung gemäß einem der Ansprüche 1 bis 6 zu einer Arbeitskonzentration von 0,1 bis 5 Gewichtsprozent in Wasser, die einen pH-Wert im Bereich von 2 bis 6 aufweist.

8. Desinfizierende Zusammensetzung nach Anspruch 7, worin die Zusammensetzung einen pH-Wert im Bereich von 3 bis 5 aufweist.

9. Verfahren zum Desinfizieren einer Oberfläche oder eines Artikels, worin eine wässerige desinfizierende Zusammensetzung nach Anspruch 7 oder Anspruch 8 auf die Oberfläche oder den Artikel aufgebracht wird.

## Revendications

1. Composition désinfectante concentrée à base de composés peroxydés, qui est une suspension stable permettant d'établir une composition désinfectante aqueuse ayant un pH compris entre 2 et 6, ladite composition concentrée comprenant :
(a) 0,1 à 50% en poids d'un acide peroxydé organique solide essentiellement non hydrosoluble ;
(b) 0,1 à 50% en poids d'acides organiques hydrosolubles sous forme d'acide citrique et d'un autre acide organique hydrosoluble choisi parmi l'acide acétique, l'acide propionique et l'acide succinique et ayant un pH compris entre 2 et 4.

2. Composition selon la revendication 1, qui contient au maximum 5% en poids d'un agent sequestrant.

3. Composition selon la revendication 2, dans laquelle l'agent sequestrant est choisi parmi les dérivés acide polycarboxylique des amines ou des polyamines , l'acide nitrilotriacétique et les acides phosphoniques.

4. Composition selon l'une quelconque des revendications 1 à 3, dans laquelle l'acide organique peroxydé solide, essentiellement insoluble dans l'eau est un acide peroxycarboxylique dérivé d'un acide dicarboxylique contenant de 8 à 13 atomes de carbone.

5. Composition selon la revendication 4, dans laquelle l'acide organique peroxydé est l'acide 1,12-diperoxydodecane-dioique.

6. Composition selon l'une quelconque des revendications 1 à 5, qui comprend en outre jusqu'à 50% en poids d'un tensioactif choisi parmi les tensioactifs anioniques, non ioniques et leurs mélanges.

7. Composition désinfectante aqueuse qu'on prépare en diluant une composition concentrée selon l'une quelconque des revendications 1 à 6, à une concentration opérationnelle comprise entre 0,1 et 5,0% en poids dans l'eau, et ayant un pH de 2 à 6.

8. Composition désinfectante selon la revendication 7, dont le pH est compris entre 3 et 5.

9. Procédé de désinfection d'une surface ou d'un article, selon lequel on applique une composition désinfectante aqueuse selon la revendication 7 ou 8 à la surface ou à l'article.
